# EUROPEAN PATENT APPLICATION

(11) **EP 1 032 238 A1**
(43) Date of publication of application: **30.08.2000**
(21) Application number: 99830623.7
(22) Date of filing: 05.10.1999
(51) Int. Cl.: H04Q 9/00

(54) **Method for remote control reading of utility meters using satellite transmission**

(30) Priority: 24.02.1999 IT BS990017
(71) Applicant: ICA S.r.l., Industria Contatori Acqua, 70043 Monopoli (Bari) (IT)
(72) Inventor: Lena, Roberto, 25065 Lumezzane S.S. (Brescia) (IT); Tedeschi, Giuseppe, 70043 Monopoli (Bari) (IT); Girola, Giovanni, 10138 Torino (IT); Abrescia, Luigi, 70020 Loseto (Bari) (IT)
(74) Representative: Manzoni, Alessandro

(57) **Abstract**

The invention concerns a method for remote control reading of electricity, gas and water meters. It includes the digital recording of consumption data for each of numerous meters with a local reading unit on each meter; a transmission, via radio, of the consumption data from numerous local reading units to at least one data-collecting unit, capable of recognising each single local unit individually and of communicating with this by using question and answer messages; the memorisation of at least the identification and consumption data of every meter in said collecting unit, and the transfer of data collected from the data-collecting unit to a satellite terminal for transmission via satellite communication to a ground station and from this to a data management and elaboration centre.

## Description

### The invention field

This invention refers to the reading of electricity, gas and water meters, for calculating, managing and charging the consumption of users.

### State of the art

The companies who supply the services, namely the suppliers of electricity, gas and water are researching into systems for reading meters more regularly and with reduced operating costs, as well as providing an improved service for users.

At present, many companies use computer support in obtaining and recording data from readings, making use of hand-held portable terminals, which then unload the data directly into a central data processor for the managing operations and charging of consumption.

However, gathering the information remains a manual job and requires every single meter to be inspected, while, on the positive side, the manual typing-in is followed by the rapid unloading of the information, directly in electronic form. This has brought about a significant improvement in efficiency for the companies because the data is typed in only once and because the personal details, together with the latest readings and average consumption, are directly available to the meter reader.

According to another procedure, the meter reading is done with the help of a hand-held portable terminal, equipped with a two-way radio and operating software, which is connected to a data collection unit for elaboration.

In this way, the meter reading is speeded up and there is a significant improvement in data quality, thanks to the absence of human error in the typing-in.

The latest research in this sector is directed towards creating a system that will enable an automatic and periodical reading of the meters at a distance, without having to use meter inspectors in the field in order to record the consumption directly from the meter, thereby doing away with operative costs completely.

### Summary of the invention

This invention is the result of such research and is aimed at proposing a method of remote-controlled meter-reading that is completely automatic and computerised, with all the evident advantages and consequences.

To put into practice, the invention essentially needs a reading unit on each meter, at least one local data-collecting unit, which receives and transmits information to and from numerous local reading units, and a terminal for satellite transmission, coupled to one or all of the data-collecting units and designed to transfer the reading data from the collecting unit to a fixed central unit for elaboration and checking.

In this way, without relying on meter inspectors, it will be possible to read the meters several times a year, say, every quarter, with the possibility of sending out bills more regularly, which has obvious advantages from an economic point of view.

Furthermore, inserting a series blocking system on the meter means that, by sending the appropriate command from the control centre, and without the need to send an operator to the neighbourhood of the meter in question, it will be possible to interrupt the water supply, should this prove necessary because of the arrearage of the user.

The satellite transmission, unlike any other communication system, guarantees complete coverage of the whole territory.

### Brief description of the drawings

Here below, the invention is described with particular reference to water meters, although it is equally applicable to electricity and gas meters. The description is made with reference to the enclosed plans, where:
Fig. 1 shows the lay-out of the system according to the invention;
Fig. 2 shows a block drawing for a local reading unit; and
Fig. 3 shows a block drawing for the data-collecting unit.

### Detailed description of the invention

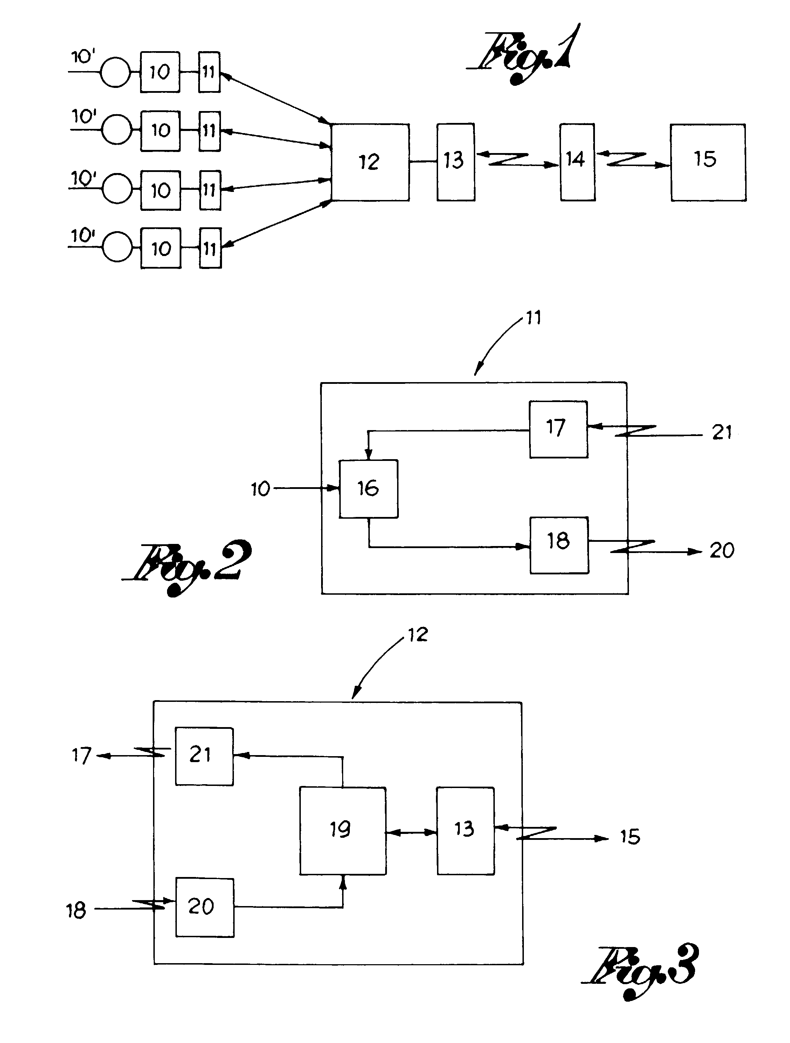

Fig. 1 represents several water meters 10, each of which is furnished with a local reading unit 11, which links up with a data-collecting unit 12 via radio contact. Each data-collecting unit 12 is paired with a terminal for satellite transmission 13 and communicates, via this and a ground station 14, with a central elaboration unit 15.

To record consumption, every meter 10 is equipped with or incorporates an incremental-type consumption sensor, for example a reed contact emitter or similar device, which generates a contact make for each base unit of consumption.

The local unit 11 is connected to such a consumption sensor on the respective meter 10 and, where necessary, to a bistable electrovalve 10', placed in series with the meter and designed to open and close the water supply through the meter and to the user, as required.

The local reading unit 11 may be contained in a box, placed, for example, on the front of the meter 10 and consisting essentially of three operational sections - Fig. 2.

The first section 16 consists of a VLSI custom circuit, which forms the digital part of the local unit. It includes a decoder for the incoming message and any eventual command of the electrovalve, a generator for the answering message, an interface manager for the meter and the electrovalve, the data recorders, and the programming, operating and recognition recorders.

A second section 17, consists of a radio receiver for the incoming messages, including an RF amplifier with bandpass filter, followed by a demodulator. This converts the radio signal into a baseband signal, suitable for decoding by the VLSI circuit in the first section 16.

The receiver is always on, but in a state of stand-by, waiting for a message from the data-collecting unit; the receiver is furnished with its own antenna, integrated into the printed circuit.

A third section 18, consists of a radio transmitter for sending answers in response to incoming messages. It is capable of converting the baseband signal, generated by the VLSI circuit 16, into a modulated RF signal for sending the data relative to the consumption and identification of the meter to the reading unit 12. The transmitter is furnished with its own antenna, integrated into the printed circuit. The local electronic unit is powered by a lithium battery which guarantees long-term autonomy.

The impulses from the consumption sensor or emitter are processed in the local unit 11 by a digital filter, to prevent false calculations due to possible jumps in the reed contact, and, finally, stored in a data recorder.

Every sensor may be equipped with an optional anti-fraud function, which also tests for network leakage; the local unit can be programmed to run both these functions.

The data-collecting unit 12 is a device capable of identifying and interrogating via radio a high density of local units 11, within a geographic area. The data collected are then communicated to the satellite terminal 13, which is associated with the same data-collecting unit.

The data-collecting unit - Fig. 3 - essentially consists of four sections.

A principal control unit 19, which constitutes the digital microprocessor of the data-collecting unit; this section manages the interface functions with the local unit (incoming messages and responses), the processing of the data received and the exchange of data with the satellite terminal.

A receiver section 20, according to the choices made for the transmitter 18 of the local units 11.

A transmitter section 21, capable of converting the baseband signal generated by the principal control unit into a modulated signal, according to the specifications of the receiver section 17 of the local units 11.

An antenna section, used both for transmitting messages and receiving them. Normally the antenna is connected to the receiver section and, only when an incoming signal (wake up) needs to be transmitted, is the antenna switched over to the transmitter section.

The low-consumption data-collecting unit can be powered by the mains, or, if this is not easily available, by a battery, so as to guarantee long-term autonomy.

The data collected are sent, via an RS232 interface, to the satellite terminal 13, contained within the same data-collecting unit and then, via satellite, to the central unit 15, for checking, elaborating and use.

The system is set in motion when an incoming message is sent via radio from the data-collecting unit 12 to all the local units 11 present within the radius of action of the same data-collecting unit.

This message is sent automatically, according to certain pre-established programmes, for example, every three months, or following the arrival, via satellite system, of an incoming command from the control centre 15.

All the local units that are interrogated and recognise the transmitted identification codes, transmit a response in rapid sequence; this method enables all the meters in question to be read practically at the same time. The data-collecting unit reads the messages transmitted by the local units and memorises those which correspond to the codes requested.

At the end of the reading cycle, and after having verified that the readings are complete, the data-collecting unit automatically transfers the data to the satellite terminal and, from this, to the control centre, as necessary.

The satellite communication system "ORBCOMM", for example, can be used to transmit data to the control centre 15.

This system is based on a constellation of LEO (Low Earth Orbit) communication satellites, designed to offer a service for bi-directional messages. It allows brief messages to be transferred between user terminals (the data-collecting units 12) and central locations, according to the following procedure:
- practically in real time, when there is satellite visibility and the satellite is within sight of the ground station 14;
- at a deferred time, when there is no satellite visibility or when the satellite is not within sight of the ground station 14.
The transfer of information between user terminal and the centre for collecting and checking data happens as follows: the messages are transmitted from the user terminal via satellite to the ground station 14, from where they are passed on (directly or indirectly) to the final destination 15, by means of ground circuits such as dedicated lines, E-mail, dial-up, etc. For transmission in the opposite direction, from the final control centre to the user terminal, the same route is followed, in reverse.

When the data-collecting unit is powered by battery, in order to ensure an autonomy equal to that of the local units, the whole data-collecting unit is normally kept switched off, except for a calendar-clock, which, at programmed intervals (every few months, for example), turns on the power to the data-collecting unit, thereby enabling the meter readings to be taken from the local units and their subsequent transmission, via the user terminal, to the satellite network and, from there, to the managing and data-control centre of the agency responsible for supplying the service.

## Claims

1. Method for remote control reading of electricity, gas and water meters, comprising:
- a digital recording of the consumption data from each one of numerous meters with a local reading unit on each meter, which collects the consumption data and identifies it individually from a distance;
- a transmission, via radio, of the consumption data from numerous local reading units to at least one data-collecting unit, capable of recognising individually each single local unit and of communicating with it by messages of question and response;
- the memorisation of at least the data of consumption and identification of every meter in said data-collecting unit, and
- the transfer of the data collected from said data-collecting unit to a satellite terminal for transmission via satellite communication to a ground station and from this to a final centre for managing and elaborating data.

2. Method according to claim 1, in which the data-collecting unit periodically interrogates the local units on the meters to which they are connected, memorises the data collected and sends them in real time, or after a time delay, to the satellite terminal, for transmission to the final centre.

3. Method according to claims 1 and 2, in which the data-collecting unit is programmed to communicate with the local reading units periodically and/or following a signal coming via satellite communication from the data management and elaboration centre.

4. Method according to the previous claims, in which the local reading unit is programmed to manage blocking devices on the meter, following a signal from the data management and elaboration centre, via the data-collecting unit.

5. Equipment for remote control reading of electricity, gas and water meters, characterised by:
- a local reading unit (11) positioned on each of numerous meters (10), including at least means for converting the consumption measured by the meter into digital consumption data, means of identification and means for the receiving and transmitting of data via radio;
- at least one data-collecting unit (12), interfaced with each of numerous local reading units and including at least one recognition unit for each single local unit, means for processing and memorising the data originating from each local unit, means for questioning the receiving-transmission devices of each local unit via radio and means of interfacing with a satellite terminal; and
- a managing and control centre (15) with a satellite communication system, with the satellite terminal linked to a data-collecting unit.

6. Equipment according to claim 5, in which said local reading unit (11) includes a decoder of incoming messages, a generator of responses that indicate the consumption data, data records and operational programming.

7. Equipment according to claim 6, where each meter is equipped with a device for blocking the supply, in which said local reading unit (11) also includes means for managing said blocking device in response to a signal coming from the data-collecting unit or from the management and elaboration centre.

8. Equipment according to claim 5, in which the data-collecting unit (12) includes a microprocessor for managing the interface with every local reading unit, the processing of the data received and the exchange of data with the satellite terminal, a transmitter section and a receiver section connected to the means of receiving and transmitting on the local reading units.

9. Equipment according to claim 8, in which the satellite terminal is contained within the data-collecting unit and linked to it by means of an RS232 interface.

10. Equipment according to claims 5-9, in which the local reading unit and the data-collecting unit can be powered by long-lasting batteries, with at least the data-collecting unit normally switched off, except for a calendar-clock, and activated periodically for the collection of consumption data and satellite communication with the control centre.
